# EUROPÄISCHE PATENTSCHRIFT

(11) **EP 0 698 046 B1**
(45) Veröffentlichungstag und Bekanntmachung des Hinweises auf die Patenterteilung: **05.03.1997**
(21) Anmeldenummer: 94916182.2
(22) Anmeldetag: 02.05.1994
(51) Int. Cl.: C08F 26/06, C11D 3/37

(54) **HOMO- UND COPOLYMERISATE VON 1-VINYLIMIDAZOL, VERFAHREN ZU IHRER HERSTELLUNG UND IHRE VERWENDUNG**
HOMOPOLYMERS AND COPOLYMERS OF 1-VINYLIMIDAZOLE, METHOD OF PRODUCING THEM AND THEIR USE
HOMOPOLYMERES ET COPOLYMERES DE 1-VINYLIMIDAZOLE, PROCEDE DE PREPARATION ET UTILISATION

(30) Priorität: 13.05.1993 DE 4316023
(43) Veröffentlichungstag der Anmeldung: 28.02.1996
(73) Patentinhaber: BASF Aktiengesellschaft, 67063 Ludwigshafen (DE)
(72) Erfinder: DETERING, Juergen, D-67117 Limburgerhof (DE); DENZINGER, Walter, D-67346 Speyer (DE)
(86) Internationale Anmeldenummer: EP9401390
(87) Internationale Veröffentlichungsnummer: WO9426796

(56) Entgegenhaltungen:
- EP-A- 0 246 580
- DE-A- 2 814 287

## Beschreibung

Die Erfindung betrifft Homo- und Copolymerisate von 1-Vinylimidazol, ein Verfahren zur Herstellung von niedrigmolekularen Polymerisaten des 1-Vinylimidazols durch radikalische Polymerisation von 1-Vinylimidazol oder von Mischungen aus 1-Vinylimidazol und 1-Vinylpyrrolidon in C₁- bis C₄-Alkoholen, Wasser oder in Mischungen aus Wasser und mindestens einem C₁- bis C₄-Alkohol und die Verwendung der Polymerisate in Waschmitteln.

Die Herstellung von Homopolymerisaten des 1-Vinylimidazols und von Copolymerisaten aus 1-Vinylimidazol und 1-Vinylpyrrolidon durch Polymerisieren der Monomeren in Substanz oder in Lösemitteln ist bekannt, vgl. DE-A-2 814 287. Die in der Literatur beschriebenen Polymerisate des 1-Vinylimidazols enthalten noch größere Mengen an nichtpolymerisiertem Vinylimidazol, so daß die Polymerisate einen sehr unangenehmen Geruch besitzen, der auch noch in hoher Verdünnung wahrnehmbar ist. Um die Polymerisate zu isolieren und zu reinigen werden sie im Anschluß an ihrer Herstellung einer aufwendigen und technisch nicht praktikablen Fällungsoperation unterzogen.

Der vorliegenden Erfindung liegt die Aufgabe zugrunde, neue Stoffe und ein technisch einfaches Verfahren zur Herstellung von restmonomerarmen, niedrigmolekularen Homopolymerisaten des 1-Vinylimidazols und von Copolymerisaten aus 1-Vinylimidazol und 1-Vinylpyrrolidon zur Verfügung zu stellen.

Die Aufgabe wird erfindungsgemäß gelöst mit Homopolymerisaten von 1-Vinylimidazol und Copolymerisaten aus 1-Vinylimidazol und 1-Vinylpyrrolidon, wenn sie jeweils Schwefel in gebundener Form enthalten und einen K-Wert von 10 bis 40 (bestimmt nach H. Fikentscher in 0,1 n wäßriger Kochsalzlösung bei 25°C und einer Polymerkonzentration von 1 Gew.-%) haben.

Die genannten Homopolymerisate von 1-Vinylimidazol und die Copolymerisate aus 1-Vinylimidazol und 1-Vinylpyrrolidon sind außerdem dadurch gekennzeichnet, daß sie erhältlich sind durch radikalische Polymerisation von 1-Vinylimidazol oder von Mischungen aus 1-Vinylimidazol und 1-vinylpyrrolidon in C₁- bis C₄-Alkoholen, Wasser oder in Mischungen aus Wasser und mindestens einem C₁- bis C₄-Alkohol in Gegenwart von Polymerisationsreglern, die Schwefel in gebundener Form enthalten.

Gegenstand der Erfindung ist außerdem ein Verfahren zur Herstellung von niedrigmolekularen Polymerisaten des 1-Vinylimidazols durch radikalische Polymerisation von 1-Vinylimidazol oder von Mischungen aus 1-Vinylimidazol und 1-Vinylpyrrolidon in C₁- bis C₄-Alkoholen, Wasser oder in Mischungen aus Wasser und mindestens einem C₁- bis C₄-Alkohol, wobei man die Polymerisation in Gegenwart von Polymerisationsreglern durchführt, die Schwefel in gebundener Form enthalten. Als Polymerisationsregler werden vorzugsweise Mercaptoverbindungen, Dialkylsulfide, Dialkyldisulfide und/oder Diarylsulfide eingesetzt.

Die oben beschriebenen Homo- und Copolymerisate werden als Farbstoffübertragungsinhibitor in Waschmitteln verwendet.

Nach dem erfindungsgemäßen Verfahren werden niedrigmolekulare Homopolymerisate und Copolymerisate von 1-Vinylimidazol und 1-Vinylpyrrolidon hergestellt. Die Homo- und Copolymerisate haben K-Werte von 10 - 40, vorzugsweise 13 bis 30 (bestimmt nach H. Fikentscher in 0,1 n wäßriger Natriumchloridlösung bei 25°C und einer Polymerkonzentration von 1 Gew.-%). Die Polymerisation der Monomeren findet üblicherweise in einer Inertgasatmosphäre statt, z. B. Stickstoff, Argon oder Helium. Während der Polymerisation wird im allgemeinen für eine gute Durchmischung der Reaktionspartner gesorgt. Die Polymerisation wird in C₁- bis C₄-Alkohlen, Wasser oder Mischungen aus Wasser und mindestens einem C₁- bis C₄-Alkohl durchgeführt. Vorzugsweise verwendet man Wasser oder Mischungen aus Wasser und mindestens einem C₁- bis C₄-Alkohol in beliebigem Verhältnis als Lösemittel. Als Alkohole eignen sich Methanol, Ethanol, n-Propanol, Isopropanol, n-Butanol, tert.-Butanol und Isobutanol. Von den Alkoholen wird vorzugsweise Isopropanol eingesetzt.

Zur Herstellung von Copolymerisaten aus 1-Vinylimidazol und 1-Vinylpyrrolidon kann man die Monomeren in jedem beliebigen Verhältnis bei der Copolymerisation einsetzen. Die bei der Copolymerisation eingesetzten Monomergemische enthalten bevorzugt 5 bis 99,9 Gew.-% 1-Vinylimidazol und 0,1 bis 95 Gew.-% 1-Vinylpyrrolidon. Die Polymerisationstemperatur liegt vorzugsweise im Bereich von 50 bis 100°C. Sofern die Polymerisation bei höheren Temperaturen durchgeführt wird, z. B. bei Temperaturen bis zu 150°C, wird sie in druckdicht verschlossenen Apparaturen vorgenommen.

Die Monomeren werden radikalisch polymerisiert, d. h. zur Initiierung der Homo- und Copolymerisation benötigt man Verbindungen, die unter den Polymerisationsbedingungen Radikale bilden. Solche Radikale bildenden Initiatoren sind alle üblichen Peroxi- und Azoverbindungen, beispielsweise Peroxide, Hydroperoxide und Peroxyester wie Wasserstoffperoxid, Dibenzoylperoxid, Di-t-butylperoxid, t-Butylhydroperoxid, t-Butylperoxypivalat und t-3utylperoxy-2-ethylhexanoat sowie Azoverbindungen wie 2,2'-Azobis(2-amidinopropan)dihydrochlorid, 2,2'-Azobis[2-(2-imidazolin-2-yl)propan]dihydrochlorid, 2,2'-Azobisisobutyronitril, 2,2'-Azobis(2-methylbutyronitril) und Dimethyl-2,2'-azobis(2-methylpropionat). Man kann selbstverständlich auch Initiatormischungen oder die bekannten Redoxinitiatoren verwenden. Die Initiatoren werden in den üblichen Mengen eingesetzt, z. B. in Mengen von 0,3 bis 6 Gew.-%, bezogen auf die zu polymerisierenden Monomeren. Sofern die Polymerisation in Wasser oder in Mischungen aus Wasser und mindestens einem der obengenannten Alkohole als Lösemittel durchgeführt wird, verwendet man vorzugsweise wasserlösliche Azoinitiatoren.

Die Polymerisation wird erfindungsgemäß in Gegenwart von Polymerisationsreglern durchgeführt, die Schwefel in gebundener Form enthalten. Verbindungen dieser Art sind beispielsweise anorganische Hydrogensulfite, Disulfite und Dithionite oder organische Sulfide, Disulfide, Polysulfide, Sulfoxide, Sulfone und Mercaptoverbindungen. Folgende Polymerisationsregler werden beispielhaft genannt: Di-n-butylsulfid, Di-n-octylsulfid, Diphenylsulfid, Thiodiglykol, Ethylthioethanol, Diisopropyldisulfid, Di-n-butyldisulfid, Di-n-hexyldisulfid, Diacetyldisulfid, Diethanolsulfid, Di-t-butyltrisulfid und Dimethylsulfoxid. Bevorzugt als Polymerisationsregler eingesetzte Verbindungen sind Mercaptoverbindungen, Dialkylsulfide, Dialkyldisulfide und/oder Diarylsulfide. Beispiele für diese Verbindungen sind Ethylthioglykolat, Cystein, 2-Mercaptoethanol, 1,3-Mercaptopropanol, 3-Mercaptopropan-1,2-diol, 1,4-Mercaptobutanol, Mercaptoessigsäure, 3-Mercaptopropionsäure, Mercaptobernsteinsäure, Thioglycerin, Thioessigsäure, Thioharnstoff und Alkylmercaptane wie n-Butylmercaptan, n-Hexylmercaptan oder n-Dodecylmercaptan. Besonders bevorzugt eingesetzte Polymerisationsregler sind Mercaptoalkohole und Mercaptocarbonsäuren. Die Polymerisationsregler, die Schwefel in gebundener Form enthalten, werden in Mengen von 0,1 bis 15, vorzugsweise 0,5 bis 10 Gew.-%, bezogen auf die bei der Polymerisation eingesetzten Monomeren, verwendet. Bei der Polymerisation können selbstverständlich auch Mischungen der erfindungsgemäß einzusetzenden Polymerisationsregler angewendet werden.

Die Monomeren können nach den üblichen Verfahrenstechniken polymerisiert werden, z. B. nach der sogenannten Batch-Polymerisation, bei der man entweder 1-Vinylimidazol oder Mischungen aus 1-Vinylimidazol und 1-Vinylpyrrolidon, Regler und Initiator in einem Lösemittel vorlegt und auf die Polymerisationstemperatur erwärmt. Das Reaktionsgemisch wird solange bei der Polymerisationstemperatur gerührt, bis die Umsetzung mehr als 99,9 % beträgt. Die Zugabe des Initiators kann bei diesem Verfahren gegebenenfalls auch erst nach Erreichen der Polymerisationstemperatur erfolgen.

Weitere Verfahrensvarianten zur Polymerisation stellen die Zulaufmethoden dar, die bevorzugt angewandt werden. Bei diesen Verfahrensvarianten wird zu einem Gemisch aus Vinylimidazol oder einer Mischung aus Vinylimidazol und Vinylpyrrolidon und einem Lösemittel bei der Polymerisationstemperatur innerhalb einer bestimmten Zeit eine Lösung des Schwefel in gebundener Form enthaltenen Polymerisationsreglers und eine Initiatorlösung kontinuierlich oder portionsweise zugegeben. Es ist jedoch auch möglich, eine Mischung aus Regler und Initiator der auf Polymerisationstemperatur erwärmten Vorlage zuzudosieren. Eine andere Methode besteht darin, den Initiator unterhalb oder bei der Polymerisationstemperatur in die Vorlage zu geben und nur den Regler oder eine Lösung des Reglers nach Erreichen der Polymerisationstemperatur innerhalb eines vorgegebenen Zeitraums dem Reaktionsgemisch zuzuführen. Eine weitere Variante der Zulauftechnik besteht darin, daß man die Vorlage auf eine Temperatur erwärmt, bei der die Polymerisation abläuft und dann Regler, Initiator und Monomere in getrennten Zuläufen oder gemeinsam zugibt. Bei dieser Technik dient vorzugsweise Wasser oder ein Gemisch aus Wasser, Monomer und/oder Initiator und/oder Regler als Vorlage. Besonders bevorzugt ist erfindungsgemäß eine Verfahrensweise, bei der die Schwefel in gebundener Form enthaltenden Polymerisationsregler während der Polymerisation der Monomeren kontinuierlich oder portionsweise zudosiert werden.

Das Molekulargewicht nach dem Gewichtsmittel M_{W} der so hergestellten Homo- und Copolymerisate des 1-Vinylimidazols liegt in dem Bereich von 2 000 bis 50 000, vorzugsweise 5 000 bis 40 000. Diese Polymerisate haben K-Werte von 10 bis 40 (bestimmt nach H. Fikentscher in 0,1 n wäßriger Kochsalzlösung bei 25°C und bei einer Polymerkonzentration von 1 Gew.-%). Die Konzentration der Monomeren in dem wäßrigen Medium beträgt üblicherweise 10 bis 50 und liegt vorzugsweise in dem Bereich von 20 bis 45 Gew.-%. Die bei der Polymerisation entstehenden Lösungen können im Anschluß an den Polymerisationsprozeß einer physikalischen oder chemischen Desodorierung unterworfen werden. Darunter versteht man u.a. eine Nachbehandlung der Polymerlösung mittels Wasserdampfdestillation oder Strippen mit Stickstoff, wobei mit Wasserdampf flüchtige Verunreinigungen aus der Lösung entfernt werden. Bei einer chemischen Nachbehandlung erfolgt der Zusatz von Polymerisationsinitiatoren oder Mischungen mehrerer Polymerisationsinitiatoren und Erhitzen der Polymerlösung gegebenenfalls auf Temperaturen, die oberhalb der Polymerisationstemperatur liegen.

Nach dem erfindungsgemäßen Verfahren erhält man restmonomerarme Polymerlösungen, die direkt in den Handel gebracht werden können. Solche Polymerlösungen werden beispielsweise als Zusatz zu Waschmitteln verwendet. Sie bewirken beim Waschen von gefärbten und weißen Textilien eine Inhibierung der Farbstoffübertragung auf die nichtgefärbten Textilien. Solche Waschmittel enthalten beispielsweise 0,1 bis 10, vorzugsweise 0,2 bis 3 Gew.-% an Homopolymerisaten des 1-Vinylimidazols oder an Copolymerisaten aus 1-Vinylimidazol und 1-Vinylpyrrolidon. Die nach dem erfindungsgemäßen Verfahren erhältlichen Homo- und Copolymerisate von 1-Vinylimidazol zeichnen sich durch eine hohe Verträglichkeit mit den üblichen Waschmittelbestandteilen aus und besitzen einen niedrigen Restmonomergehalt. Der Restmonomergehalt an 1-Vinylimidazol liegt üblicherweise bei höchstens 0,02 Gew.-%. Die Copolymerlösungen enthalten üblicherweise weniger als 0,02 Gew.-% 1-Vinylpyrrolidon. Gegenüber den bisher bekannten Polymerlösungen zeichnen sich die erfindungsgemäß erhältlichen Polymeren außerdem durch eine verbesserte Farbe aus. Die Polymeren können aus dem wäßrigen Polymerisationsmedium beispielsweise durch Sprühtrocknung isoliert werden. Andere Trocknungsverfahren, beispielsweise Eindampfen der Polymerlösung und Mahlen des Rückstandes oder Gefriertrocknen sind ebenfalls möglich.

Die in den Beispielen angegebenen K-Werte wurden nach H. Fikentscher, Cellulose-Chemie, Band 13, 58 bis 64 und 71 bis 74 (1932) in 0,1 n wäßriger Kochsalzlösung bei 25°C-Lösung und einer Polymerkonzentration von 1 Gew.-% bestimmt. Die Prozentangaben in den Beispielen bedeuten Gew.-%. Der Restmonomergehalt der Polymerisate wurde durch gaschromatographische Analyse, das Molekulargewicht nach dem Gewichtsmittel durch Lichtstreuung bestimmt.

### Beispiel 1

Ein Gemisch aus 200 g 1-Vinylpyrrolidon (VP), 50 g 1-Vinylimidazol (VI) und 600 g Wasser wird in einer Rührapparatur vorgelegt und unter Rühren in einer Stickstoffatmosphäre auf 65°C erwärmt. Sobald diese Temperatur erreicht ist, gibt man 5 g 2,2'-Azobis(2-amidinopropan)dihydrochlorid, gelöst in 30 ml Wasser, zu. Anschließend dosiert man innerhalb von 1 Stunde eine Lösung von 5 g Mercaptoethanol in 30 ml Wasser kontinuierlich zu. Nach beendeter Dosierung wird das Reaktionsgemisch 2 Stunden bei 65°C gerührt, dann mit 1,25 g 2,2'-Azobis(2-amidinopropan)dihydrochlorid versetzt und weitere 3 Stunden bei 65°C gerührt. Man erhält eine hellgelbe, geruchsarme, viskose Polymerlösung. Der K-Wert des Copolymers beträgt 27,4, das Molekulargewicht 28 000. Die wäßrige Polymerlösung hat einen Feststoffgehalt von 30 % und enthält weniger als 50 ppm VI und weniger als 50 ppm VP.

### Beispiel 2

Beispiel 1 wird mit den Ausnahmen wiederholt, daß man als Vorlage eine Mischung aus 175 g 1-Vinylpyrrolidon, 75 g 1-Vinylimidazol und 600 g Wasser vorlegt. Man erhält eine hellgelbe klare Polymerlösung ohne den typischen Geruch nach 1-Vinylimidazol. Das Copolymerisat hat einen K-Wert von 22,3 und ein Molekulargewicht von 20 000. Die wäßrige Lösung hat einen Feststoffgehalt von 29 % und enthält weniger als 50 ppm VI und weniger als 50 ppm VP.

### Beispiel 3

In einer für das Arbeiten unter einer Stickstoffatmosphäre ausgerüsteten Apparatur, die mit einem Rührer versehen ist, wird ein Gemisch aus 150 g 1-Vinylpyrrolidon, 100 g 1-Vinylimidazol und 600 g Wasser vorgelegt und unter Rühren in einer Stickstoffatmosphäre auf eine Temperatur von 70°C erwärmt. Sobald diese Temperatur erreicht ist, gibt man 6 g 2,2'-Azobis(2-amidinopropan)dihydrochlorid, gelöst in 35 ml Wasser, zu. Anschließend dosiert man kontinuierlich innerhalb von 1 Stunde eine Lösung von 7,6 g Diethanoldisulfid in 40 ml Wasser zu. Danach wird das Reaktionsgemisch 2 Stunden bei 70°C gerührt, mit 1,5 g 2,2'-Azobis(2-amidinopropan)dihydrochlorid versetzt und weitere 4 Stunden bei 70°C gerührt. Man erhält eine gelbe, geruchsarme wäßrige Polymerlösung. Der K-Wert des Copolymeren beträgt 24,7, das Molekulargewicht 26 000. Die wäßrige Polymerlösung hat einen Feststoffgehalt von 28 % und enthält 110 ppm VI und 150 ppm VP.

### Beispiel 4

Beispiel 1 wird mit den Ausnahmen wiederholt, daß man ein Gemisch aus 125 g VP, 125 g VI und 600 g Wasser vorlegt. Der Reglerzulauf besteht aus einer Lösung von 5 g Mercaptoessigsäure in 30 ml Wasser. Man erhält eine gelbe Polymerlösung, die klar und geruchsarm ist. Der K-Wert des Copolymers beträgt 26,8, das Molekulargewicht 34 000. Die wäßrige Polymerlösung hat einen Feststoffgehalt von 30 % und enthält weniger als 50 ppm VI und weniger als 50 ppm VP.

### Beispiel 5

In einer Rührapparatur werden 125 g VP, 125 g VI und 600 g Wasser vorgelegt und unter Stickstoffspülung und Rühren auf 75°C erhitzt. Sobald das Reaktionsgemisch eine Temperatur von 70°C erreicht hat, dosiert man als Zulauf 1 eine Lösung von 5 g 2,2'-Azobis(2-amidinopropan)dihydrochlorid in 100 ml Wasser innerhalb von 100 Minuten und als Zulauf 2 eine Lösung von 10 g Mercaptoethanol in 50 ml Wasser innerhalb von 70 Minuten. Nach Beendigung der Dosierung des Initiators wird das Reaktionsgemisch 75 Minuten bei einer Temperatur von 75°C gerührt, anschließend mit 1,25 g 2,2'-Azobis(2-amidinopropan)dihydrochlorid versetzt und weitere 2 Stunden bei 75°C gerührt. Die so erhaltene gelbe, klare Polymerlösung mit einem Feststoffgehalt von 26,4 % ist geruchsarm und restmonomerenarm. Sie enthält weniger als 50 ppm VI und weniger als 50 ppm VP. Das Copolymerisat hat einen K-Wert von 19,4 und ein Molekulargewicht von 12 000.

### Beispiel 6

In einer Polymerisationsapparatur wird ein Gemisch aus 10 g VP, 10 g VI, 1,5 g Mercaptoethanol und 65 g Wasser unter Rühren und Stickstoffbegasung auf eine Temperatur von 75°C erwärmt. Nach Erreichen dieser Temperatur wird als Zulauf 1 eine Mischung aus 135 g VP, 135 VI, 16,2 g Mercaptoethanol und 485 g Wasser und als Zulauf 2 eine Lösung von 5,7 g 2,2'-Azobis(2-amidinopropan)dihydrochlorid in 100 g Wasser innerhalb von 3 Stunden zudosiert. Das Reaktionsgemisch wird anschließend 30 Minuten bei 75°C gerührt und danach mit einer wäßrigen Lösung von 1,5 g 2,2'-Azobis(2-amidinopropan)dihydrochlorid in 10 g Wasser innerhalb von 5 Minuten versetzt und 2,5 Stunden bei 75°C gerührt. Man erhält eine gelbe, klare, geruchsarme Polymerlösung mit einem Feststoffgehalt von 33 %. Sie enthält weniger als 50 ppm VI und weniger als 50 ppm VP. Das Copolymerisat hat einen K-Wert von 15 und ein Molekulargewicht von 6 000.

### Beispiel 7

Beispiel 1 wird mit der Ausnahme wiederholt, daß man als Vorlage ein Gemisch aus 75 g VP, 175 g VI und 600 g Wasser verwendet. Man erhält ein gelbe, geruchsarme viskose Polymerlösung mit einem Feststoffgehalt von 28,4 %. Das Copolymerisat hat einen K-Wert von 32,5 und ein Molekulargewicht von 39 000. Die wäßrige Polymerlösung hat eine niedrige Restmonomerkonzentration, und zwar 100 ppm VI und weniger als 50 ppm VP.

### Beispiel 8

In einer Polymerisationsapparatur wird ein Gemisch aus 300 g VI und 400 g Wasser in einer Stickstoffatmosphäre unter Rühren auf eine Temperatur von 80°C erhitzt. Nach Erreichen dieser Temperatur wird als Zulauf 1 eine Lösung von 9 g Mercaptoethanol in 50 g Wasser innerhalb von 2 Stunden und als Zulauf 2 eine Lösung von 7,5 g Azobis(2-methylbutyronitril) in 70 g Isopropanol innerhalb von 3 Stunden zudosiert. Anschließend wird das Reaktionsgemisch 1 Stunde bei einer Temperatur von 80°C gerührt, dann mit einer Lösung von 1,5 g Azobis(2-methylbutyronitril) in wenig Isopropanol versetzt und das Reaktionsgemisch weitere 3 Stunden bei 80°C gerührt. Das Isopropanol wird anschließend mit Hilfe einer Wasserdampfdestillation aus dem Reaktionsgemisch entfernt. Man erhält eine gelbe und geruchsarme Polymerlösung mit einem Feststoffgehalt von 40 % und einer geringen Restmonomerenkonzentration (80 ppm). Das Homopolymerisat des Vinylimidazols hat einen K-Wert von 21,5 und ein Molekulargewicht von 23 000.

### Vergleichsbeispiele gemäß der DE-A-28 14 287

### Vergleichsbeispiel 1

Gemäß den Angaben in Beispiel 6 der DE-A-28 14 287 wurde eine Mischung aus 9,4 g VI, 22,2 g VP und 120 g Methanol beim Siedepunkt des Reaktionsgemisches unter Durchleiten von Stickstoff in Gegenwart von 0,6 g Azoisobuttersäuredinitril als Initiator copolymerisiert. Man erhielt eine geruchsintensive Polymerlösung mit einem Feststoffgehalt von 24,6 %. Das Copolymerisat hatte eine K-Wert von 49. Die Polymerlösung enthielt 650 ppm VI und 6 600 ppm VP.

### Vergleichsbeispiel 2

Gemäß der in Beispiel 5 der DE-A-28 14 287 angegebenen Vorschrift wurde eine Mischung aus 18,8 g VI, 11,1 g VP und 120 g Methanol mit 6 g Azoisobuttersäuredinitril als Initiator beim Siedepunkt des Reaktionsgemisches copolymerisiert. Man erhielt eine geruchsintensive Polymerlösung mit einem Feststoffgehalt von 22,3 %. Die Lösung enthielt 1,15 % nichtpolymerisiertes VI und 0,62 % nichtpolymerisiertes VP. Der K-Wert des Copolymerisats betrug 42,6.

### Vergleichsbeispiel 3

In einem 500 ml fassenden Kolben wurden 78 g VI, 78 g Wasser und 2 g Azoisobuttersäuredinitril vorgelegt und unter Stickstoffatmosphäre 6 Stunden bei 80°C gerührt. Man erhielt eine geruchsintensive Polymerlösung mit einem Feststoffgehalt von 50,6 %. Der VI-Gehalt der Lösung betrug 0,42 %. Das Homopolymerisat von VI hatte einen K-Wert von 43,9.

Wie die Vergleichsbeispiele belegen, erhält man gemäß den Beispielen der DE-A-28 14 287 keine niedrigmolekularen, restmonomerenarmen Polymerlösungen.

## Patentansprüche

1. Homopolymerisate von 1-Vinylimidazol und Copolymerisate aus 1-Vinylimidazol und 1-Vinylpyrrolidon, dadurch gekennzeichnet, daß sie jeweils Schwefel in gebundener Form enthalten und einen K-Wert von 10 bis 40 (bestimmt nach H. Fikentscher in 0,1 n wäßriger Kochsalzlösung bei 25°C und einer Polymerkonzentration von 1 Gew.-%) haben.

2. Homo- und Copolymerisate nach Anspruch 1, dadurch gekennzeichnet, daß sie erhältlich sind durch radikalische Polymerisation von 1-Vinylimidazol oder von Mischungen aus 1-Vinylimidazol und 1-Vinylpyrrolidon in C₁- bis C₄-Alkoholen, Wasser oder in Mischungen aus Wasser und mindestens einem C₁- bis C₄-Alkohol in Gegenwart von Polymerisationsreglern, die Schwefel in gebundener Form enthalten.

3. Verfahren zur Herstellung von Polymerisaten nach Anspruch 1 oder 2, dadurch gekennzeichnet, daß man 1-Vinylimidazol oder Mischungen aus 1-Vinylimidazol und 1-Vinylpyrrolidon in C₁- bis C₄-Alkoholen, Wasser oder in Mischungen aus Wasser und mindestens einem C₁- bis C₄-Alkohol in Gegenwart von Polymerisationsreglern, die Schwefel in gebundener Form enthalten, radikalisch polymerisiert.

4. Verfahren nach Anspruch 3, dadurch gekennzeichnet, daß man die Polymerisationsregler in Mengen von 0,1 bis 15 Gew.-%, bezogen auf die Monomeren, einsetzt.

5. Verfahren nach Anspruch 3 oder 4, dadurch gekennzeichnet, daß man als Polymerisationsregler Mercaptoverbindungen, Dialkylsulfide, Dialkyldisulfide und/oder Diarylsulfide einsetzt.

6. Verfahren nach einem der Ansprüche 3 bis 5, dadurch gekennzeichnet, daß man die Polymerisationsregler während der Polymerisation der Monomeren kontinuierlich oder portionsweise zugibt.

7. Verwendung der Polymerisate nach Anspruch 1 oder 2 als Farbstoffübertragungsinhibitor in Waschmitteln.

## Claims

1. A homopolymer of 1-vinylimidazole or copolymer of 1-vinylimidazole and 1-vinylpyrrolidone, each of which contains sulfur in bound form and has a K value of from 10 to 40 (determined by the method of H. Fikentscher in 0.1 N aqueous sodium chloride solution at 25°C with a polymer concentration of 1% by weight).

2. A homo- or copolymer as claimed in claim 1, obtainable by free-radical polymerization of 1-vinylimidazole or of mixtures of 1-vinylimidazole and 1-vinylpyrrolidone in C₁-C₄-alcohols, water or mixtures of water and at least one C₁-C₄-alcohol in the presence of polymerization regulators which contain sulfur in bound form.

3. A process for preparing a polymer as claimed in claim 1 or 2, which comprises free-radical polymerization of 1-vinylimidzole or of mixtures of 1-vinylimidazole and 1-vinylpyrrolidone in C₁-C₄-alcohols, water or mixtures of water and at least one C₁-C₄-alcohol in the presence of polymerization regulators which contain sulfur in bound form.

4. A process as claimed in claim 3, wherein the polymerization regulators are employed in amounts of from 0.1 to 15% of the weight of the monomers.

5. A process as claimed in claim 3 or 4, wherein mercapto compounds, dialkyl sulfides, dialkyl disulfides and/or diaryl sulfides are employed as polymerization regulators.

6. A process as claimed in any of claims 3 to 5, wherein the polymerization regulators are added continuously or in portions during the polymerization of the monomers.

7. The use of the polymers as claimed in claim 1 or 2 as dye transfer inhibitors in detergents.

## Revendications

1. Homopolymères de 1-vinylimidazole et copolymères de 1-vinylimidazole et de 1-vinylpyrrolidone, caractérisés en ce qu'ils contiennent du soufre à l'état lié et ont une valeur K de 10 à 40 (déterminée selon H. Fikentscher dans une solution aqueuse de chlorure de sodium 0,1 N, à 25°C et avec une concentration de polymère de 1% en poids).

2. Homo- et copolymères selon la revendication 1, caractérisés en ce qu'ils sont obtenus par polymérisation radicalaire de 1-vinylimidazole ou de mélanges de 1-vinylimidazole et de 1-vinylpyrrolidone dans des alcools en C₁-C₄, dans de l'eau ou dans des mélanges d'eau et d'au moins un alcool en C₁-C₄, en présence de régulateurs de polymérisation qui contiennent du soufre à l'état lié.

3. Procédé de préparation de polymères selon la revendication 1 ou 2, caractérisé en ce que l'on soumet à une polymérisation radicalaire du 1-vinylimidazole ou des mélanges de 1-vinylimidazole et de 1-vinylpyrrolidone, dans des alcools en C₁-C₄, dans de l'eau ou dans des mélanges d'eau et d'au moins un alcool en C₁-C₄, en présence de régulateurs de polymérisation qui contiennent du soufre à l'état lié.

4. Procédé selon la revendication 3, caractérisé en ce que l'on utilise les régulateurs de polymérisation dans des proportions de 0,1 à 15% en poids par rapport aux monomères.

5. Procédé selon la revendication 3 ou 4, caractérisé en ce que l'on utilise, comme régulateurs de polymérisation, des composés mercapto, des sulfures de dialkyle, des disulfures de dialkyle et/ou des sulfures de diaryle.

6. Procédé selon l'une quelconque des revendications 3 à 5, caractérisé en ce que l'on ajoute les régulateurs de polymérisation de façon continue ou par portions au cours de la polymérisation des monomères.

7. Utilisation des polymères selon la revendication 1 ou 2 comme inhibiteur de transfert de couleur dans des produits de lavage.
